# EUROPÄISCHE PATENTSCHRIFT

(11) **EP 3 234 743 B1**
(45) Veröffentlichungstag und Bekanntmachung des Hinweises auf die Patenterteilung: **06.03.2019**
(21) Anmeldenummer: 15793705.3
(22) Anmeldetag: 31.10.2015
(51) Int. Cl.: G06F 3/041, G06F 3/0488, B60K 35/00, B60K 37/06

(54) **VERFAHREN ZUM BETREIBEN EINER BEDIENVORRICHTUNG EINES KRAFTFAHRZEUGS IN UNTERSCHIEDLICHEN BEDIENMODI SOWIE BEDIENVORRICHTUNG UND KRAFTFAHRZEUG**
METHOD FOR OPERATING AN OPERATING DEVICE OF A MOTOR VEHICLE IN DIFFERENT OPERATING MODES, OPERATING DEVICE, AND MOTOR VEHICLE
PROCÉDÉ DE FONCTIONNEMENT D'UN DISPOSITIF DE COMMANDE D'UN VÉHICULE DANS DES MODES DE FONCTIONNEMENT DIFFÉRENTS, DISPOSITIF DE COMMANDE ET VÉHICULE AUTOMOBILE

(30) Priorität: 18.12.2014 DE 102014019005
(43) Veröffentlichungstag der Anmeldung: 25.10.2017
(73) Patentinhaber: Audi AG, 85045 Ingolstadt (DE)
(72) Erfinder: MÜLLER, Ulrich, 85055 Ingolstadt (DE); WACHINGER, Michael, 86571 Winkelhausen (DE); KRÄMER, Tim, 85117 Eitensheim (DE)
(86) Internationale Anmeldenummer: PCT/EP2015/002193
(87) Internationale Veröffentlichungsnummer: WO 2016/096066

(56) Entgegenhaltungen:
- DE-A1-102011 109 259
- US-A1- 2011 248 948

## Beschreibung

Die Erfindung betrifft ein Verfahren zum Betreiben einer Bedienvorrichtung eines Kraftfahrzeugs. Die Erfindung betrifft außerdem eine Bedienvorrichtung sowie ein Kraftfahrzeug.

Berührungssensitive Bedieneinheiten bzw. Touchpads sind bereits aus dem Stand der Technik bekannt und werden beispielsweise in Laptops verwendet, um Funktionen des Laptops zu steuern oder auszuwählen. So kann das Touchpad eine Position eines Fingers ermitteln, mit welchem ein Nutzer das Touchpad berührt, und damit eine Interaktion mit einem Bildschirminhalt des Laptops ermöglichen. Dazu kann beispielsweise ein Mauszeiger auf dem Bildschirm gesteuert werden, indem der Nutzer mit seinem Finger das Touchpad berührt. In der US 2011/0304550 A1 wird eine Bedieneinheit beschrieben, welche dazu ausgelegt ist, mehrere Eingabemethoden, beispielsweise eine Eingabe mit einem Finger oder einem Eingabestift, bereitzustellen und eine Konfiguration der Bedieneinheit an die momentane Eingabemethode anzupassen.

Zunehmend werden solche Touchpads auch in Kraftfahrzeugen eingesetzt, sodass ein Nutzer, beispielsweise der Fahrer des Kraftfahrzeugs, Funktionen des Kraftfahrzeugs, beispielsweise Infotainmentkomponenten, ein Navigationssystem oder ein Telefon, steuern kann. Diese Funktionen können beispielsweise durch direktes Drücken des Touchpads oder durch Überstreichen des Touchpads gesteuert werden. Dabei kann es zu Abweichungen zwischen gewollter Eingabe und getätigter Eingabe kommen, wenn sich der Fahrer beispielsweise während der Fahrt auf das Führen des Kraftfahrzeugs konzentriert und versehentlich auf das Touchpad drückt.

Auch ist aus dem Stand der Technik bekannt, Touchpads mit einer Kraftsensorik zu kombinieren, welche eine Fingerkraft des Nutzers, also einen Druck, den der Nutzer mit seinem Finger auf das Touchpad ausübt, ermittelt. Durch die Druckerfassung ist eine Funktionsauslösung über eine Betätigungskraft bzw. einen Betätigungsdruck möglich. Dies bedeutet, dass der Nutzer eine Funktion beispielsweise durch Gleiten über das Touchpad anwählen und durch Drücken die Funktion auswählen kann. Damit kann das Verhalten einer herkömmlichen mechanischen Taste simuliert werden. Erst beim Druck auf das Touchpad wird die jeweilige Funktion ausgelöst. Um den subjektiven Qualitätseindruck beim Betätigen weiterhin zu verbessern, kann ein mechanischer haptischer Impuls, beispielsweise eine Vibration, durch einen Aktuator erzeugt werden. Zusätzlich kann auch ein Ton, beispielsweise ein Klick-Geräusch, über einen Lautsprecher bei einer Betätigung erzeugt werden. Das Touchpad fühlt sich dadurch beim Betätigen nahezu wie eine mechanische Taste an.

Darüber hinaus sind berührungssensitive Bildschirme bzw. Touchscreens aus dem Stand der Technik bekannt. Solche Touchscreens sind bei beispielsweise bei an sich bekannten Tablets vorgesehen, um einen Programmablauf des Tablets durch Berührungen von Teilen des Bildschirms, beispielsweise mit einem Finger, zu steuern. Dazu zeigt die US 2014/0043259 A1 ein elektronisches Gerät mit einem Touchpad und einem Touchscreen. Dabei wird eine Sensitivität des Touchpads abhängig davon verändert, ob das elektronische Gerät als ein Laptop oder als ein Tablet verwendet wird.

Aus der DE 10 2011 109 259 A1 ist eine Eingabevorrichtung, insbesondere für ein Kraftfahrzeug, bekannt, mit einer zum Erfassen einer Gleitbewegung ausgebildeten berührungssensitiven Fläche und wenigsten einer daran angrenzenden drückbaren Tastenfläche, die ein integrales, einen kapazitiven Sensor aufweisendes Element bilden, und wobei zumindest der drückbaren Tastenfläche ein ein Signal liefernder Kraft- oder Drucksensor zugeordnet ist.

Die US 2011/0248948 A1 offenbart ein Verfahren, bei welchem ein Wert zumindest eines Parameters eines portablen elektronischen Gerätes identifiziert wird. Ein Berührungsschwellwert wird basierend auf dem Wert des zumindest einen Parameters modifiziert, sodass ein modifizierter Berührungsschwellwert bereitgestellt wird. Dann wird eine Berührung auf einem berührungssensitiven Gerät detektiert und eine erste Funktion wird ausgeführt, wenn die Berührung dem Berührungsschwellwert entspricht.

Es ist Aufgabe der vorliegenden Erfindung, eine Lösung bereitzustellen, mittels welcher eine zuverlässigere Bedienung einer Bedienvorrichtung ermöglicht werden kann und mittels welcher Fehlbedienungen vermieden werden können.

Diese Aufgabe wird erfindungsgemäß durch ein Verfahren, eine Bedienvorrichtung sowie ein Kraftfahrzeug mit den Merkmalen gemäß den unabhängigen Patentansprüchen gelöst. Vorteilhafte Ausführungen der Erfindung sind Gegenstand der abhängigen Patentansprüche, der Beschreibung und der Figuren.

Das erfindungsgemäße Verfahren dient zum Betreiben einer Bedienvorrichtung eines Kraftfahrzeugs. Das Verfahren umfasst das Erfassen einer Zeitdauer, über welche eine berührungssensitive Bedieneinheit mit einem Objekt berührt wird und/oder das Erfassen einer Strecke, welche durch das Objekt beim Berühren auf der berührungssensitiven Bedieneinheit zurückgelegt wird. Außerdem umfasst das Verfahren das Vorgeben eines Bedienmodus in Abhängigkeit der erfassten Zeitdauer und/oder der erfassten Strecke, das Vorgeben eines Druckschwellwerts in Abhängigkeit des vorgegebenen Bedienmodus, sowie das Erfassen einer aktuellen Position, an welcher die in dem vorgegebenen Bedienmodus betriebene berührungssensitive Bedieneinheit mit dem Objekt berührt wird, und das Erfassen eines Druckes, mit welchem die berührungssensitive Bedieneinheit durch Berühren der berührungssensitiven Bedieneinheit beaufschlagt wird. Darüber hinaus umfasst das Verfahren das Ermitteln, ob der erfasste Druck größer als der vorgegebene Druckschwellwert ist und das Auslösen einer der erfassten aktuellen Position zugeordneten Funktion des Kraftfahrzeugs ausschließlich, falls der erfasste Druck größer als der vorgegebene Druckschwellwert ist.

Mittels der Bedienvorrichtung können Funktionen des Kraftfahrzeugs, beispielsweise Infotainmentfunktionen des Kraftfahrzeugs, durch einen Nutzer, insbesondere den Fahrer des Kraftfahrzeugs, ausgewählt und/oder ausgelöst und/oder gesteuert werden. Die Bedienvorrichtung weist eine berührungssensitive Bedieneinheit auf, welche beispielsweise als eine berührungssensitive Fläche bzw. als ein Touchpad ausgestaltet sein kann und welche mittels an sich bekannter Funktionsprinzipien eine Berührungsempfindlichkeit umsetzen kann.

Die berührungssensitive Bedieneinheit ist dazu ausgelegt, zu bestimmen, wie lange die berührungssensitive Bedieneinheit mit dem Objekt berührt wird und wie weit das Objekt auf der berührungssensitiven Bedieneinheit bewegt wird. Zur Erfassung der Strecke kann beispielsweise kontinuierlich eine Position des Objektes auf der berührungssensitiven Bedieneinheit erfasst werden. Das Objekt ist insbesondere ein Finger einer Hand, mit welchem der Nutzer die Bedienvorrichtung bedient. Wenn der Nutzer beispielsweise mit dem Objekt über die berührungssensitive Bedieneinheit streicht, so legt das Objekt dabei eine gewisse Strecke auf der berührungssensitiven Bedieneinheit zurück und verbleibt für eine gewisse Zeitdauer auf der berührungssensitiven Bedieneinheit. Auch kann es sein, dass der Nutzer die berührungssensitive Bedieneinheit mit dem Objekt beispielsweise nur punktuell berührt. Dabei legt das Objekt gar keine Strecke auf der berührungssensitiven Bedieneinheit zurück und verbleibt gegebenenfalls nur kurzzeitig auf der berührungssensitiven Bedieneinheit. Basierend auf der erfassten Zeitdauer und/oder der erfassten Strecke wird ein aktueller Bedienmodus der Bedienvorrichtung festgelegt.

Außerdem erfasst die berührungssensitive Bedieneinheit die aktuelle Position des Objektes auf der berührungssensitiven Bedieneinheit. Darüber hinaus wird ein Druck, beispielsweise mittels eines Drucksensors, erfasst, welchen das Objekt auf die berührungssensitive Bedieneinheit ausübt. Die der ermittelten Position zugeordnete Funktion wird nur dann ausgelöst, wenn der erfasste Druck einen vorgegebenen Druckschwellwert überschreitet, also wenn der beaufschlagte Druck größer als der vorgegebene Druckschwellwert ist. Der vorgegebene Druckschwellwert kann auch als Auslöseschwelle bezeichnet werden. Um die Funktion auszulösen, ist es also vorgesehen, dass der Nutzer einen Druck bzw. einen Auslösedruck auf die berührungssensitive Bedieneinheit aufbringt, welcher die Auslöseschwelle überschreitet. Dieser vorgegebene Druckschwellwert wird in Abhängigkeit des Bedienmodus, also in Abhängigkeit der erfassten Strecke und/oder der erfassten Zeitdauer, verändert bzw. variiert.

Dem Nutzer werden also verschiedene Interaktionsmöglichkeiten mit der Bedienvorrichtung bereitgestellt. So können dem Nutzer beispielweise in einem Bedienmodus nur Druckfunktionen bereitgestellt werden, bei welchen der Nutzer durch punktuelles Berühren der berührungssensitiven Bedieneinheit an einer bestimmten Position und durch Drücken der bestimmten Position mit einem Druck größer dem Druckschwellwert dieses Bedienmodus die der Position zugeordnete Funktion auslöst. In einem anderen Bedienmodus kann der Nutzer durch Überstreichen der berührungssensitiven Bedieneinheit, bei welchem das Objekt einen Druck kleiner dem Druckschwellwert dieses anderen Bedienmodus auf die berührungssensitive Bedieneinheit ausübt, beispielsweise mit einem Bildschirminhalt eines Bildschirms des Kraftfahrzeugs interagieren und dort dargestellte Funktionen beispielsweise durch Drücken mit einem Druck größer dem Druckschwellwert dieses anderen Bedienmodus auslösen.

Um also zu gewährleisten, dass durch das Drücken der Bedieneinheit nur dann eine der aktuellen Position zugeordnete Funktion ausgelöst wird, wenn dies auch durch den Nutzer gewünscht ist, wird der Druckschwellwert an den jeweiligen Bedienmodus angepasst. Damit kann insbesondere verhindert werden, dass nicht gewünschte Funktionen versehentlich, beispielsweise durch unbeabsichtigtes Drücken während des Überstreichens, ausgelöst werden. Mittels des erfindungsgemäßen Verfahrens kann der Fahrer die Bedienvorrichtung also einfach und fehlerfrei bedienen.

Darüber hinaus wird ein erster Druckwert als der Druckschwellwert vorgegeben, wenn die erfasste Zeitdauer eine vorbestimmte Zeitdauer unterschreitet und/oder die erfasste Strecke eine vorbestimmte Strecke unterschreitet, und ein zweiter Druckwert als der Druckschwellwert vorgegeben, wenn erfasst wird, dass die erfasste Zeitdauer zumindest der vorbestimmten Zeitdauer entspricht und/oder die erfasste Strecke zumindest der vorbestimmten Strecke entspricht, wobei der erste Druckwert kleiner als der zweite Druckwert ist. Insbesondere ist hier vorgesehen, dass der erste Druckwert in einem ersten Bedienmodus vorgegeben wird, wenn der Fahrer die berührungssensitive Bedieneinheit im Wesentlichen nur punktuell an einer bestimmten Position mit dem Objekt berührt und dabei drückt, um eine der Position zugeordnete Funktion auszulösen. Mit anderen Worten bedeutet dies, dass der erste Druckwert vorgegeben wird, wenn erfasst wird, dass das Objekt im Wesentlichen überhaupt keine Strecke auf der berührungssensitiven Bedieneinheit zurücklegt und/oder die berührungssensitive Bedieneinheit nur kurzzeitig berührt. Beim Vorgeben des ersten Druckwertes, also im ersten Bedienmodus, wird davon ausgegangen, dass der Nutzer durch das punktuelle Berühren und Drücken der Position die zugeordnete Funktion bewusst auswählen möchte. Somit kann der erste Druckwert so gewählt werden, dass der Nutzer die Funktion schnell und leicht auslösen kann. Der erste Druckwert kann beispielsweise etwa 3 N betragen.

Der zweite Druckwert wird in einem zweiten Bedienmodus vorgegeben, wenn erfasst wird, dass der Nutzer mit dem Objekt über die berührungssensitive Bedieneinheit streicht. Mit anderen Worten bedeutet dies, dass der zweite Druckwert vorgegeben wird, sobald erfasst wird, dass das Objekt eine Strecke auf der berührungssensitiven Bedieneinheit zurücklegt und/oder über einen längeren Zeitraum auf der berührungssensitiven Bedieneinheit verweilt. Um nun zu verhindern, dass während des Überstreichens eine Funktion ausgelöst wird, wenn der Nutzer beim Überstreichen versehentlich aufdrückt, wird der Druckschwellwert im Vergleich zum ersten Bedienmodus angehoben. Es wird also der zweite Druckwert als der Druckschwellwert vorgegeben. Der zweite Druckwert kann beispielsweise etwa 5 N betragen. Wenn der Nutzer also im zweiten Bedienmodus eine Funktion durch Drücken auslösen möchte, so muss er einen größeren Druck aufbringen als im ersten Bedienmodus. So kann beispielsweise verhindert werden, dass im zweiten Bedienmodus eine unerwünschte Funktion durch das versehentliche Aufbringen eines Druckes auf die berührungssensitive Bedieneinheit ausgelöst wird, welcher im ersten Bedienmodus zum Auslösen der Funktion geführt hätte. Somit können auf besonders einfache und zuverlässige Weise Fehlbedienungen verhindert werden.

Außerdem wird, wenn erfasst wird, dass die berührungssensitive Bedieneinheit nur mit dem Objekt berührt wird und die erfasste Zeitdauer zumindest der vorbestimmten Zeitdauer entspricht und/oder die erfasste Strecke zumindest der vorbestimmten Strecke entspricht, ein Schrifteingabemodus als der Bedienmodus vorgegeben, bei welchem ein Überstreichen der berührungssensitiven Bedieneinheit mittels des Objekts erfasst und in Abhängigkeit davon zumindest einem alphanumerischen Zeichen zugeordnet wird. Ein solches alphanumerisches Zeichen kann beispielsweise ein Buchstabe oder eine Ziffer oder ein Symbol sein. In diesem Schrifteingabemodus kann der Nutzer mit dem Objekt beispielsweise Buchstaben auf die berührungssensitive Bedieneinheit schreiben, welche durch die berührungssensitive Bedieneinheit erfasst werden können. Somit kann der Nutzer beispielsweise eine Zieleingabe für ein Navigationssystem tätigen. Während der Schrifteingabe durch den Nutzer wird üblicherweise keine Tastendruckfunktion benötigt. Um dem Nutzer aber dennoch eine Tastendruckfunktion zu ermöglichen, wird während des Schrifteingabemodus der zweite Druckwert als der Druckschwellwert angegeben. Es wird also die Auslöseschwelle während des Schrifteingabemodus im Vergleich zu einem Bedienmodus angehoben, in welchem der Nutzer eine Position auf der berührungssensitiven Bedieneinheit durch punktuelles Berühren direkt auswählt. So kann verhindert werden, dass eine wahrscheinlich nicht gewünschte Funktion ausgelöst wird, wenn der Nutzer bei der Schrifteneingabe versehentlich aufdrückt. Möchte der Nutzer dennoch eine Funktion durch Drücken auswählen, so muss er einen Druck größer als den zweiten Druckwert aufbringen.

Vorzugsweise wird der Schrifteingabemodus für eine vorgegebene Zeitdauer weiter aufrechterhalten, nachdem erfasst worden ist, dass das Objekt die berührungssensitive Bedieneinheit nicht mehr berührt. Mit anderen Worten bedeutet dies, dass die Bedienvorrichtung für die vorgegebene Zeitdauer weiterhin in dem Schrifteingabemodus betrieben wird, wenn der Nutzer das Objekt, insbesondere kurzzeitig, von der berührungssensitiven Bedieneinheit entfernt. Dies kann beispielsweise vorkommen, wenn der Nutzer nach dem Schreiben eines Buchstaben kurzzeitig absetzt, um zum Schreiben eines weiteren Buchstabens anzusetzen. Während des Zeitraums zwischen dem Absetzen und dem erneuten Ansetzen wird der Schrifteingabemodus nicht beendet. Da der Druckschwellwert während des Schrifteingabemodus angehoben ist, wird ein erneutes, versehentlich zu festes Berühren der berührungssensitiven Bedieneinheit beim Ansetzen des neuen Buchstabens nicht als Drücken einer Position erfasst und eine wahrscheinlich unerwünschte Funktion in vorteilhafter Weise nicht ausgelöst.

Weiterhin wird, wenn erfasst wird, dass die berührungssensitive Bedieneinheit zusätzlich mit zumindest einem weiteren Objekt berührt wird und die erfasste Zeitdauer zumindest der vorbestimmten Zeitdauer entspricht und/oder die erfasste Strecke zumindest der vorbestimmten Strecke entspricht, ein Gestenbedienungsmodus als der Bedienmodus vorgegeben, bei welchem ein Überstreichen der berührungssensitiven Bedieneinheit mittels der Objekte erfasst wird und, falls das Überstreichen zumindest einer vorgegebenen Geste entspricht, eine der Geste zugeordnete Funktion des Kraftfahrzeugs ausgelöst wird. Während des Gestenbedienungsmodus kann der Nutzer also mit mehr als einem Objekt über die berührungssensitive Bedieneinheit streichen und dabei Funktionen steuern, indem er mit den Objekten ein vorbestimmte Geste auf der berührungssensitiven Bedieneinheit ausführt. Eine solche Funktion kann beispielsweise das Vergrößern ("Zoomen") eines auf einem Bildschirm des Kraftfahrzeugs dargestellten Bildschirminhalts sein. Zum Auslösen dieser Funktion kann der Nutzer eine sogenannte "Pinch-to-zoom"-Geste als die vorbestimmte Geste auf der berührungssensitiven Bedieneinheit ausführen, bei welcher der Nutzer zwei Objekte auf die berührungssensitive Bedieneinheit legt und die zwei Objekte in entgegen gesetzte Richtungen voneinander wegbewegt, sodass sich ein Abstand der Objekte zueinander vergrößert. Eine solche, durch den Nutzer durchgeführt Geste wird von der berührungssensitiven Bedieneinheit als die "Pinch-to-zoom"-Geste erkannt und daraufhin das Zoomen bzw. Vergrößern des Bildschirminhalts durchgeführt. Um dabei zu verhindern, dass versehentlich eine unerwünschte Funktion ausgelöst wird, wenn der Nutzer während der Gestendurchführung auf die berührungssensitive Bedieneinheit drückt, wird der zweite, erhöhte Druckwert als der Druckschwellwert vorgegeben.

Die erfindungsgemäße Bedienvorrichtung für ein Kraftfahrzeug umfasst eine berührungssensitive Bedieneinheit, welche dazu ausgelegt ist, eine Zeitdauer zu erfassen, während welcher die berührungssensitive Bedieneinheit mit einem Objekt berührt wird, eine Strecke zu erfassen, welche durch das Objekt beim Berühren der berührungssensitiven Bedieneinheit zurückgelegt wird, und eine aktuelle Position zu erfassen, an welcher die berührungssensitive Bedieneinheit mit dem Objekt berührt wird. Außerdem umfasst die Bedienvorrichtung eine Erfassungseinrichtung, welche dazu ausgelegt ist, einen Druck zu erfassen, mit welchem die berührungssensitive Bedieneinheit durch Berühren der berührungssensitiven Bedieneinheit beaufschlagt wird und eine Steuereinrichtung, welche dazu ausgelegt ist, zu ermitteln, ob der erfasste Druck größer als ein vorgegebener Druckschwellwert ist, und eine der erfassten aktuellen Position zugeordnete und durch punktuelles Berühren und Drücken der berührungssensitiven Bedieneinheit an der Position auslösbare Funktion des Kraftfahrzeugs ausschließlich auszulösen, falls der erfasste Druck größer als der vorgegebene Druckschwellwert ist. Außerdem ist die Steuereinrichtung dazu ausgelegt, einen von zumindest zwei Bedienmodi in Abhängigkeit der erfassten Zeitdauer und/oder der erfassten Strecke vorzugeben, den Druckschwellwert in Abhängigkeit des vorgegebenen Bedienmodus vorzugeben, einen ersten Druckwert in einem ersten Bedienmodus als den Druckschwellwert vorzugeben, wenn die erfasste Zeitdauer eine vorbestimmte Zeitdauer unterschreitet und/oder die erfasste Strecke eine vorbestimmte Strecke unterschreitet, und einen zweiten Druckwert in einem Schrifteingabemodus und Gestenbedienmodus als den Druckschwellwert vorzugeben, wenn erfasst ist, dass die erfasste Zeitdauer zumindest der vorbestimmten Zeitdauer entspricht und/oder die erfasste Strecke zumindest der vorbestimmten Strecke entspricht, wobei der erste Druckwert kleiner als der zweite Druckwert ist. Darüber hinaus ist die Steuereinrichtung dazu ausgelegt,
- den ersten Bedienmodus als den Bedienmodus vorzugeben, wenn erfasst ist, dass die berührungssensitive Bedieneinheit nur mit dem Objekt berührt wird und die erfasste Zeitdauer die vorbestimmte Zeitdauer unterschreitet und/oder die erfasste Strecke die vorbestimmte Strecke unterschreitet,
- den Schrifteingabemodus als den Bedienmodus vorzugeben, bei welchem ein Überstreichen der berührungssensitiven Bedieneinheit mittels des Objekts erfassbar und in Abhängigkeit davon zumindest einem alphanumerischen Zeichen zuordenbar ist, wenn erfasst ist, dass die berührungssensitive Bedieneinheit nur mit dem Objekt berührt wird und die erfasste Zeitdauer zumindest der vorbestimmten Zeitdauer entspricht und/oder die erfasste Strecke zumindest der vorbestimmten Strecke entspricht, und
- den Gestenbedienungsmodus als den Bedienmodus vorzugeben, bei welchem ein Überstreichen der berührungs-sensitiven Bedieneinheit mittels der Objekte erfassbar ist und, falls das Überstreichen zumindest einer vorgegebenen Geste entspricht, eine der Geste zugeordnete Funktion des Kraftfahrzeugs auszulösen, wenn erfasst ist, dass die berührungssensitive Bedieneinheit zusätzlich mit zumindest einem weiteren Objekt berührt wird und die erfasste Zeitdauer zumindest der vorbestimmten Zeitdauer entspricht und/oder die erfasste Strecke zumindest der vorbestimmten Strecke entspricht.

Die Erfassungseinrichtung kann beispielsweise einen Drucksensor umfassen. Die Steuereinrichtung kann auch ein Steuergerät des Kraftfahrzeugs sein, welches dazu ausgelegt ist, mit der Erfassungseinrichtung und/oder der berührungssensitiven Bedieneinheit zu kommunizieren.

Bevorzugt weist die berührungssensitive Bedieneinheit einen ersten, zumindest eine berührungssensitive Schaltfläche aufweisenden Bedienbereich und einen daran angrenzenden zweiten berührungssensitiven Bedienbereich auf, wobei die zumindest eine berührungssensitive Schaltfläche durch Drücken mit einem Druck größer dem vorgegebenen Druckschwellwert betätigbar ist, und, falls durch die Steuereinrichtung erfasst wurde, dass das Objekt die berührungssensitive Bedieneinheit zumindest für eine vorbestimmte Zeitdauer berührt hat und/oder das Objekt zumindest eine vorbestimmte Strecke auf der berührungssensitiven Bedieneinheit zurückgelegt hat, die zumindest eine berührungssensitive Schaltfläche zum Eingeben von alphanumerischen Zeichen und/oder vorbestimmten Gesten überstreichbar ist.

Die zumindest eine Schaltfläche kann beispielsweise als eine Schalttaste bzw. eine sogenannte Preset-Taste ausgeführt sein, welche auf einer definierten Position in dem ersten Bedienbereich angeordnet ist und welcher eine definierte Funktion zugeordnet ist. Diese definierte Funktion kann ausgelöst werden, indem der Nutzer die Schalttaste durch Drücken mit einem Druck größer dem Druckschwellwert betätigt. Eine solche Preset-Taste kann beispielsweise eine Menü-Taste sein, mittels welcher als die zugeordnete Funktion eine Menüsituation auf der Anzeigeeinheit aufgerufen werden kann, oder eine "Zurück"-Taste ("Back"-Taste) sein, mit welcher beispielsweise eine auf der Anzeigeeinheit dargestellte Menüsituation verlassen werden kann. Der zweite Bedienbereich kann beispielsweise wie ein an sich bekanntes Touchpad bedient werden. Dazu können auf dem zweiten Bedienbereich bzw. dem Touchpad in einem Schrifteingabemodus mit dem Objekt beispielsweise alphanumerische Zeichen eingegeben werden oder in einem Gestenbedienungsmodus mit mehreren Objekten beispielsweise vorbestimmte Gesten durchgeführt werden. Dabei ist es vorgesehen, dass die berührungssensitive Bedieneinheit während des Gestenbedienungsmodus oder während des Schrifteingabemodus bedienbereichübergreifend überstreichbar und bedienbar ist. So kann zusätzlich der erste Bedienbereich und damit die zumindest eine Schaltfläche zum Durchführen der Geste oder zum Schreiben des alphanumerischen Zeichens überstrichen bzw. überschrieben werden, sofern der beim Überstreichen aufgebrachte Druck den Druckschwellwert nicht überschreitet. Wenn der Nutzer aber die zumindest eine Schaltfläche betätigen möchte, so kann er jederzeit, also auch während des Schrifteingabemodus oder des Gestenbedienungsmodus, einen Druck größer dem Druckschwellwert auf die zumindest eine Schaltfläche ausüben.
Das erfindungsgemäße Kraftfahrzeug umfasst die erfindungsgemäße Bedienvorrichtung. Das Kraftfahrzeug ist vorzugsweise als Personenkraftwagen ausgestaltet.

Die mit Bezug auf das erfindungsgemäße Verfahren vorgestellten bevorzugten Ausführungsformen und deren Vorteile gelten entsprechend für die erfindungsgemäße Bedienvorrichtung sowie das erfindungsgemäße Kraftfahrzeug, wobei die Bedienvorrichtung insbesondere Mittel zur Durchführung der Verfahrensschritte aufweist.
Im Folgenden wird die Erfindung nun anhand von bevorzugten Ausführungsbeispielen, wie auch unter Bezugnahme auf die beigefügte Zeichnungen näher erläutert.

Es zeigen:
- Fig. 1: eine schematische Darstellung einer Ausführungsform einer erfindungsgemäßen Bedienvorrichtung;
- Fig. 2: eine schematische Darstellung einer weiteren Ausführungsform einer erfindungsgemäßen Bedienvorrichtung;
- Fig. 3: eine schematische Darstellung einer Ausführungsform einer erfindungsgemäßen Bedienvorrichtung in einem Schrifteingabemodus; und
- Fig. 4: eine schematische Darstellung einer Ausführungsform einer erfindungsgemäßen Bedienvorrichtung in einem Gestenbedienungsmodus.

Bei dem im Folgenden erläuterten Ausführungsbeispiel handelt es sich um eine bevorzugte Ausführungsform der Erfindung.

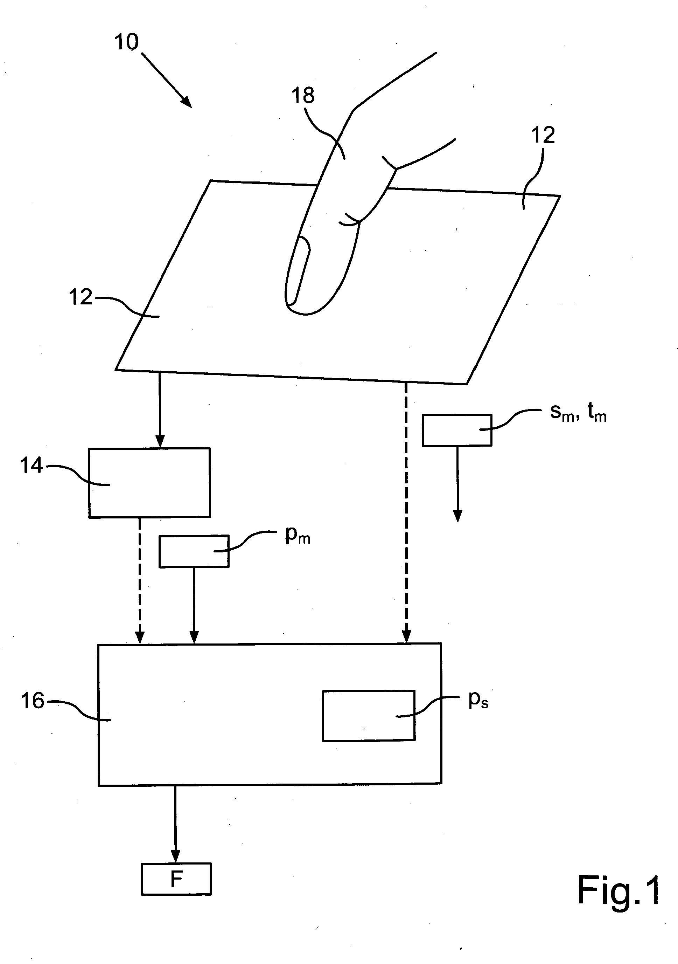

Fig. 1 zeigt eine Bedienvorrichtung 10 zum Auswählen und/oder Auslösen und/oder Steuern von Funktionen F eines hier nicht dargestellten Kraftfahrzeugs. Solche Funktionen F können beispielsweise ein Navigationssystem des Kraftfahrzeugs, eine Multimediaeinrichtung, ein Infotainmentsystem, ein sogenanntes Car-Menü, welches auf einer hier nicht gezeigten Anzeigeeinheit des Kraftfahrzeugs darstellbar ist, oder eine Freisprecheinrichtung des Kraftfahrzeugs betreffen.

Die Bedienvorrichtung 10 kann beispielsweise in einer Mittelkonsole vorgesehen sein, sodass sie insbesondere für einen Fahrer des Kraftfahrzeugs auf einfache Weise bedienbar ist. Die Bedienvorrichtung 10 weist hier eine berührungssensitive Bedieneinheit 12, eine Erfassungseinrichtung 14 und eine Steuereinrichtung 16 auf. Die Erfassungseinrichtung 14 kann beispielsweise als ein an sich bekannter Drucksensor ausgestaltet sein. Die Steuereinrichtung 16 kann auch ein Steuergerät des Kraftfahrzeugs sein, welches dazu ausgelegt ist, mit der berührungssensitiven Bedieneinheit 12 und/oder mit der Erfassungseinrichtung 14 der Bedienvorrichtung 10 zu kommunizieren.

Die Bedienvorrichtung 10 wird mit einem Finger 18 eines Nutzers, insbesondere des Fahrers des Kraftfahrzeugs, als ein berührendes Objekt bedient. Die berührungssensitive Bedieneinheit 12 ist dazu ausgelegt, eine Strecke sₘ zu erfassen, welche durch den Finger 18 beim Berühren auf der berührungssensitiven Bedieneinheit 12 zurückgelegt wird, und eine Zeitdauer tₘ zu erfassen, über welche die berührungssensitive Bedieneinheit 12 mit dem Finger 18 berührt wird. Die Strecke sₘ und/oder die Zeitdauer tₘ werden der Steuereinrichtung 16 bereitgestellt. Darüber hinaus ist die berührungssensitive Bedieneinheit 12 dazu ausgelegt, eine aktuelle Position zu erfassen, an welcher die berührungssensitive Bedieneinheit 12 mit dem Finger 18 berührt wird. Dies kann beispielsweise über die Messung einer Kapazität eines Kondensators erfolgen, welchen der Finger 18 an der Position mit der berührungssensitiven Bedieneinheit 12 ausbildet.

Die Erfassungseinrichtung 14 ist dazu ausgelegt, einen Druck pₘ zu erfassen, welchen der Finger 18 auf die berührungssensitive Bedieneinheit 12 ausübt bzw. aufbringt. Dieser von der Erfassungseinrichtung 14 erfasste Druck pₘ wird der Steuereinrichtung 16 bereitgestellt.

Die Steuereinrichtung 16 ist dazu ausgelegt, einen Bedienmodus der Bedienvorrichtung 10 in Abhängigkeit der erfassten Zeitdauer tₘ und/oder der erfassten Strecke sₘ vorzugeben. In Abhängigkeit dieses vorgegebenen Bedienmodus bestimmt die Steuereinrichtung 16 einen Druckschwellwert pₛ. Die Steuereinrichtung 16 vergleicht den von der Erfassungseinrichtung 14 erfassten Druck pₘ mit dem aktuell vorgegebenen Druckschwellwert pₛ. Falls der erfasste Druck pₘ den Druckschwellwert pₛ überschreitet, ist die Steuereinrichtung 16 dazu ausgelegt, die Funktion F auszuwählen und/oder auszulösen und/oder zu steuern. Die Funktion F wird also nur ausgewählt und/oder ausgelöst und/oder gesteuert, falls der Finger 18 beim Bedienen der Bedienvorrichtung 10 bzw. der berührungssensitiven Bedieneinheit 12 einen Druck pₘ auf die berührungssensitive Bedieneinheit 12 ausübt, welcher den Druckschwellwert pₛ, also eine Auslöseschwelle, überschreitet.

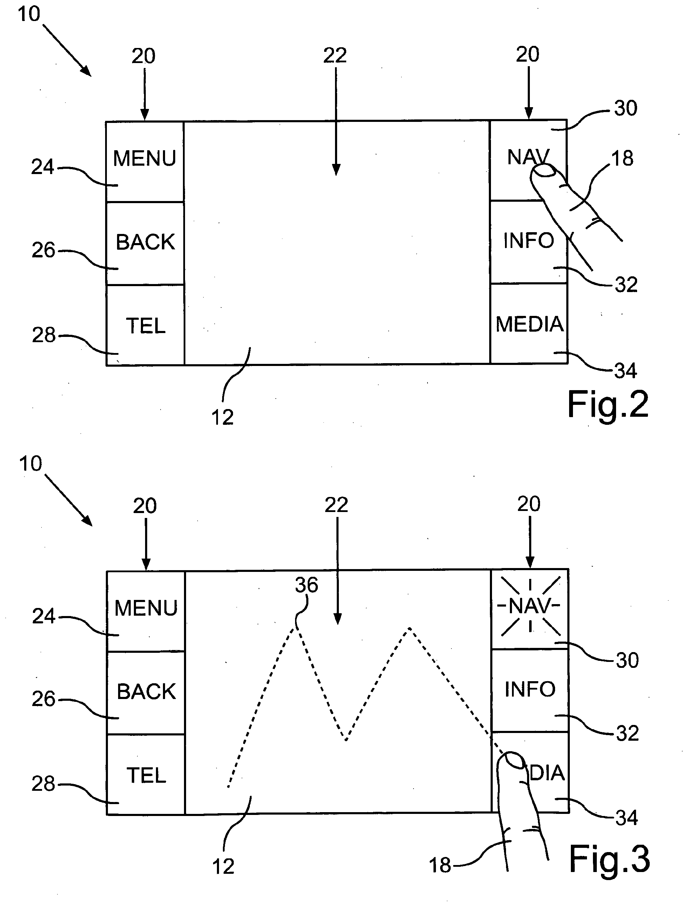

Fig. 2 zeigt eine weitere Ausführungsform einer Bedienvorrichtung 10. Die Bedienvorrichtung 10 weist hier einen ersten Bedienbereich 20 und einen zweiten Bedienbereich 22 auf, wobei der zweite Bedienbereich 20 angrenzend an den ersten Bedienbereich 20 ausgebildet ist. Der erste Bedienbereich 20 weist hier insgesamt sechs Schaltflächen 24 bis 34 auf, welche hier als Schalttasten ausgebildet sind. Jeder der Schaltflächen 24 bis 34 ist jeweils eine definierte Funktion F zugeordnet, welche durch Drücken der jeweiligen Schaltfläche 24 bis 34 mit einem Druck pₘ größer dem Druckschwellwert pₛ ausgelöst werden kann. Eine erste Schaltfläche 24 ist hier als eine Menütaste ausgestaltet, durch welche ein Menü auf einem hier nicht dargestellten Bildschirm des Kraftfahrzeugs aufgerufen werden kann. Eine zweite Schaltfläche 26 ist hier als eine sogenannte "Zurück"-Taste ausgestaltet, mittels welcher beispielsweise eine auf dem Bildschirm des Kraftfahrzeugs dargestellte Menüsituation verlassen werden kann. Durch Betätigen einer dritten Schaltfläche 28 kann ein Mobiltelefon aufgerufen werden und durch Betätigen einer vierten Schaltfläche 30 kann ein Navigationssystem des Kraftfahrzeugs aufgerufen werden. Eine fünfte Schaltfläche 32 dient zum Anzeigen von Informationen und eine sechste Schaltfläche 34 dient zum Aufrufen von Unterhaltungsfunktionen. Die hier dargestellten Schaltflächen 24 bis 34 sowie deren zugeordnete Funktionen F sind lediglich beispielhaft und nicht abschließend. Der zweite Bedienbereich 22 ist hier als ein zusammenhängender Bedienbereich ausgebildet, welcher wie ein an sich bekanntes Touchpad verwendet werden kann.

In dem hier gezeigten Ausführungsbeispiel möchte der Nutzer das Navigationssystem auswählen. Dazu berührt der Nutzer die dem Navigationssystem zugeordnete Schaltfläche 30 mit dem Finger 18 und übt einen Druck pₘ auf die Schaltfläche 30 aus, welcher von der Erfassungseinrichtung 14 erfasst wird. Die berührungssensitive Bedieneinheit 12 erfasst einen Strecke sₘ, welche der Finger 18 auf der berührungssensitiven Bedieneinheit 12 zurücklegt und/oder eine Zeitdauer tₘ, über welche die berührungssensitive Bedieneinheit 12 mit dem Finger 18 berührt wird. Die Steuereinrichtung 16 vergleicht die erfasste Strecke sₘ und/oder die erfasste Zeitdauer tₘ mit einer vorbestimmten Strecke und/oder Zeitdauer. Hier berührt der Nutzer die Schaltfläche 30 punktuell und direkt, also ohne vorher über die berührungssensitive Bedieneinheit 12 gestrichen zu haben. Dies bedeutet, dass der Finger 18 im Wesentlichen gar keine Strecke sₘ auf der berührungssensitiven Bedieneinheit 12 zurücklegt und die berührungssensitive Bedieneinheit 12 nur kurzzeitig berührt. Die Bedienvorrichtung 10, insbesondere die Steuereinrichtung 16, erkennt, dass der Fahrer die Schaltfläche 30 betätigen möchte, und gibt einen ersten Druckwert als den Druckschwellwert pₛ vor. Der erste Druckwert kann dabei etwa 3 N betragen. Wenn der durch die Erfassungseinrichtung 14 erfasste Druck pₘ größer als der Druckschwellwert pₛ ist, wird die der Schaltfläche 30 zugeordnete Funktion F ausgelöst, also hier das Navigationssystem ausgewählt bzw. aktiviert.
Fig. 3 zeigt die Ausführungsform der Bedienvorrichtung 10 aus Fig. 2. Der Nutzer hat hier das Navigationssystem durch Drücken der zugehörigen Schaltfläche 30 mit einem Druck pₘ größer dem vorgegebenen Druckschwellwert pₛ ausgewählt bzw. aktiviert. In diesem Ausführungsbeispiel möchte der Nutzer eine Zieleingabe für das Navigationssystem tätigen. Dazu schreibt der Nutzer mit seinem Finger 18 einen Buchstaben 36, beispielsweise den Buchstaben "M", auf die berührungssensitive Bedieneinheit 12. Der Buchstabe "M" kann beispielsweise der Anfangsbuchstabe des Zielortes sein, zu welchem der Nutzer mit dem Kraftfahrzeug navigiert werden möchte. Zum Schreiben des Buchstabens 36 kann der Nutzer die berührungssensitive Bedieneinheit 12 bedienbereichübergreifend nutzen, d.h. er kann mit dem Finger 18 sowohl über den ersten, die Schaltflächen 24 bis 34 aufweisenden Bedienbereich 20 als auch über den zweiten Bedienbereich 22 streichen.
Die berührungssensitive Bedieneinheit 12 erfasst eine Strecke sₘ, welche der Finger 18 während des Schreibens des Buchstabens 36 auf der berührungssensitiven Bedieneinheit 12 zurücklegt und/oder eine Zeitdauer tₘ, welche der Finger 18 während des Schreibens auf der berührungssensitiven Bedieneinheit 12 verweilt. Die Steuereinrichtung 16 erkennt, dass der Nutzer eine Schrifteingabe tätigt und stellt einen Schrifteingabemodus bereit. Zusätzlich gibt die Steuereinrichtung 16 einen zu dem Schrifteingabemodus korrespondierenden zweiten Druckwert als den Druckschwellwert pₛ vor. Der zweite Druckwert wird dabei größer gewählt als der erste Druckwert gemäß dem Ausführungsbeispiel aus Fig. 2 und kann beispielsweise etwa 5 N betragen. Somit kann beispielsweise verhindert werden, dass der Nutzer versehentlich eine der Schaltflächen 24 bis 34 betätigt, während er den ersten Bedienbereich 20 zum Schreiben des Buchstabens 38 überstreicht. Wenn er aber dennoch eine den Schaltflächen 24 bis 34 zugeordnete Funktion F auslösen möchte, so kann er mit dem Finger 18 die entsprechende Schaltfläche 24 bis 34 durch Drücken mit einem Druck pₘ größer dem zweiten Druckwert betätigen.

Auch kann vorgesehen sein, dass der Nutzer während des Schrifteingabemodus eine weitere Funktion auslösen möchte. Diese Funktion kann beispielsweise die Auswahl eines Zielortes sein, welcher auf einem Bildschirm des Kraftfahrzeugs vorgeschlagen wird, nachdem die berührungssensitive Bedieneinheit 12 den Buchstaben 36 erkannt hat. Um den vorgeschlagenen Zielort auszuwählen, kann der Nutzer mit dem Finger 18 beispielsweise auf den zweiten Bedienbereich 22 drücken. Da sich die Bedienvorrichtung 10 in dem Schrifteingabemodus befindet, muss der Nutzer einen Druck pₘ größer dem zweiten Druckwert auf den zweiten Bedienbereich 22 ausüben. Es kann aber vorgesehen sein, dass der Nutzer die Zielorteingabe fortsetzt, indem der Nutzer den Finger 18 kurzzeitig absetzt und neu ansetzt, um weitere Buchstaben auf die berührungssensitive Bedieneinheit 12 zu schreiben. Während des Absetzens und Neuansetzens verbleibt die Bedienvorrichtung 10 bevorzugt in dem Schrifteingabemodus.

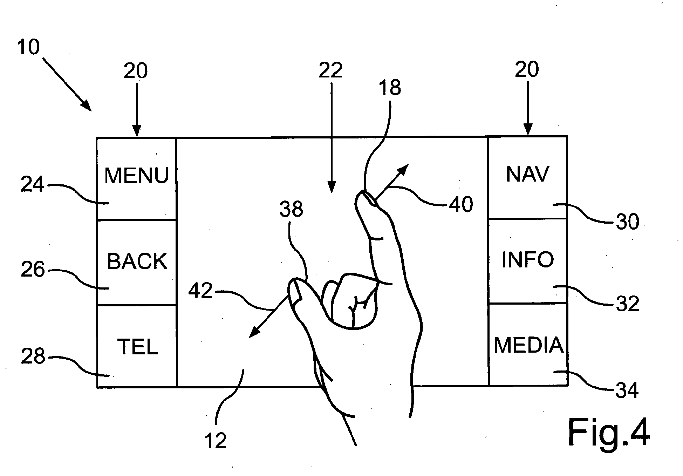

Fig. 4 zeigt die Ausführungsform der Bedienvorrichtung 10 aus Fig. 2 und Fig. 3. Der Nutzer hat hier das Navigationssystem durch Drücken der zugehörigen Schaltfläche 30 mit einem Druck pₘ größer dem vorgegebenen Druckschwellwert pₛ ausgewählt bzw. aktiviert. In diesem Ausführungsbeispiel möchte der Nutzer eine Umgebungskarte, welche auf einem hier nicht gezeigten Bildschirm dargestellt ist, vergrößern. Dazu führt der Nutzer eine Geste auf der berührungssensitiven Bedieneinheit 12 aus, welche einer vorbestimmten Geste entspricht. Hier führt der Nutzer eine sogenannte "Pinch-to-zoom"-Geste durch, mittels welcher die Umgebungskarte vergrößert werden kann. Dazu legt der Nutzer zusätzlich zu dem Finger 18 beispielsweise seinen Daumen 38 auf die berührungssensitive Bedieneinheit 12 auf, und bewegt den Finger 18 in Richtung des Pfeils 40 und den Daumen 38 in Richtung des Pfeils 42. Der Finger 18 und der Daumen 38 bewegen sich also in entgegen gesetzte Richtungen auf der berührungssensitiven Bedieneinheit 12 auseinander. Die Bedienvorrichtung 10, insbesondere die Steuereinrichtung 16, erkennt das Auseinanderbewegen des Fingers 18 und des Daumens 38 als die vorbestimmte "Pinch-to-zoom"-Geste und vergrößert die Umgebungskarte auf dem Bildschirm.

Während des Durchführens der Geste legt der Finger 18 eine Strecke sₘ auf der berührungssensitiven Bedieneinheit 12 zurück und/oder verweilt für eine Zeitdauer tₘ auf der berührungssensitiven Bedieneinheit 12, was durch die berührungssensitive Bedieneinheit 12 erfasst wird. Die Steuereinrichtung 16 gibt anhand der erfassten Zeitdauer tₘ und/oder der erfassten Strecke sₘ sowie anhand des erfassten Daumens 38 als ein weiteres berührendes Objekt einen Gestenbedienungsmodus sowie einen zu dem Gestenbedienungsmodus korrespondierenden Druckschwellwert pₛ vor. Dabei kann der bereits im Zusammenhang mit dem Schrifteingabemodus vorgegebene zweite Druckwert als der Druckschwellwert pₛ vorgegeben werden. Somit kann verhindert werden, dass eine nicht gewünschte Funktion F ausgelöst wird, wenn der Nutzer während der Durchführung der Geste versehentlich einen Druck ausübt, welcher beispielsweise in dem Ausführungsbeispiel gemäß Fig. 2 bereits die Funktion ausgelöst hätte.

Auch während der Gestenbedienung ist die berührungssensitive Bedieneinheit 12 bedienbereichübergreifend überstreichbar. Somit können auch die Schaltflächen 24 bis 34 zum Durchführen der Geste überstrichen werden. Um eine den Schaltflächen 24 bis 34 zugeordnete Funktion F auszulösen, muss der Nutzer einen Druck pₘ größer dem zweiten Druckwert auf die entsprechende Schaltfläche 24 bis 34 aufbringen.

Das in den Fig. 2 bis 4 gezeigte Ausführungsbeispiel einer Bedienung eines Navigationssystems ist lediglich beispielhaft. Ebenso können andere Funktionen des Kraftfahrzeugs, beispielsweise Infotainmentkomponenten oder ein Mobiltelefon in analoger Weise gesteuert bzw. bedient werden.

## Patentansprüche

1. Verfahren zum Betreiben einer Bedienvorrichtung (10) eines Kraftfahrzeugs, wobei die Bedienvorrichtung (10) eine berührungssensitive Bedieneinheit (12), eine Erfassungseinrichtung (14) und eine Steuereinrichtung (16) aufweist, mit den Schritten:
- durch die berührungssensitive Bedieneinheit (12), Erfassen einer Zeitdauer (tₘ), über welche die berührungssensitive Bedieneinheit (12) mit einem Objekt (18) berührt wird und/oder Erfassen einer Strecke (sₘ), welche durch das Objekt (18) beim Berühren auf der berührungssensitiven Bedieneinheit (12) zurückgelegt wird;
- durch die berührungssensitive Bedieneinheit (12), Erfassen einer aktuellen Position, an welcher die in dem vorgegebenen Bedienmodus betriebene berührungssensitive Bedieneinheit (12) mit dem Objekt (18) berührt wird;
- durch die Erfassungseinrichtung (14), Erfassen eines Druckes (pₘ), mit welchem die berührungssensitive Bedieneinheit (12) durch Berühren der berührungssensitiven Bedieneinheit (12) beaufschlagt wird;
- durch die Steuereinrichtung (16), Ermitteln, ob der erfasste Druck (pₘ) größer als ein vorgegebener Druckschwellwert (pₛ) ist;
- durch die Steuereinrichtung (16), Auslösen einer der erfassten aktuellen Position zugeordneten und durch punktuelles Berühren und Drücken der berührungssensitiven Bedieneinheit (12) an der Position auslösbaren Funktion (F) des Kraftfahrzeugs ausschließlich, falls der erfasste Druck (pₘ) größer als der vorgegebene Druckschwellwert (pₛ) ist; **gekennzeichnet durch**
- durch die Steuereinrichtung (16), Vorgeben eines von zumindest zwei Bedienmodi in Abhängigkeit der erfassten Zeitdauer (tₘ) und/oder der erfassten Strecke (sₘ),
- durch die Steuereinrichtung (16), Vorgeben des Druckschwellwertes (pₛ) in Abhängigkeit des vorgegebenen Bedienmodus;
- durch die Steuereinrichtung (16), Vorgeben eines ersten Druckwerts in einem ersten Bedienmodus als den Druckschwellwert (pₛ), wenn die erfasste Zeitdauer (tₘ) eine vorbestimmte Zeitdauer unterschreitet und/oder die erfasste Strecke (sₘ) eine vorbestimmte Strecke unterschreitet, und Vorgeben eines zweiten Druckwerts in einem Schrifteingabemodus und Gestenbedienmodus als den Druckschwellwert (pₛ), wenn erfasst wird, dass die erfasste Zeitdauer (tₘ) zumindest der vorbestimmten Zeitdauer entspricht und/oder die erfasste Strecke (sₘ) zumindest der vorbestimmten Strecke entspricht, wobei der erste Druckwert kleiner als der zweite Druckwert ist und wobei,
- wenn erfasst wird, dass die berührungssensitive Bedieneinheit (12) nur mit dem Objekt (38) berührt wird und die erfasste Zeitdauer (tₘ) die vorbestimmte Zeitdauer unterschreitet und/oder die erfasste Strecke (sₘ) die vorbestimmte Strecke unterschreitet, der erste Bedienmodus als der der Bedienmodus vorgegeben wird;
- wenn erfasst wird, dass die berührungssensitive Bedieneinheit (12) nur mit dem Objekt (18) berührt wird und die erfasste Zeitdauer (tₘ) zumindest der vorbestimmten Zeitdauer entspricht und/oder die erfasste Strecke (sₘ) zumindest der vorbestimmten Strecke entspricht, der Schrifteingabemodus als der Bedienmodus vorgegeben wird, bei welchem ein Überstreichen der berührungssensitiven Bedieneinheit (12) mittels des Objekts (18) erfasst und in Abhängigkeit davon zumindest einem alphanumerischen Zeichen (36) zugeordnet wird;
und
- wenn erfasst wird, dass die berührungssensitive Bedieneinheit (12) zusätzlich mit zumindest einem weiteren Objekt (38) berührt wird und die erfasste Zeitdauer (tₘ) zumindest der vorbestimmten Zeitdauer entspricht und/oder die erfasste Strecke (sₘ) zumindest der vorbestimmten Strecke entspricht, der Gestenbedienungsmodus als der Bedienmodus vorgegeben wird, bei welchem ein Überstreichen der berührungssensitiven Bedieneinheit (12) mittels der Objekte (18, 38) erfasst wird und, falls das Überstreichen zumindest einer vorgegebenen Geste entspricht, eine der Geste zugeordnete Funktion (F) des Kraftfahrzeugs ausgelöst wird.

2. Verfahren nach Anspruch 1,
**dadurch gekennzeichnet, dass**
der Schrifteingabemodus für eine vorgegebene Zeitdauer weiter aufrechterhalten wird, nachdem erfasst worden ist, dass das Objekt (18) die berührungssensitive Bedieneinheit (12) nicht mehr berührt.

3. Bedienvorrichtung (10) für ein Kraftfahrzeug, mit
- einer berührungssensitiven Bedieneinheit (12), welche dazu ausgelegt ist, eine Zeitdauer (tₘ) zu erfassen, während welcher die berührungssensitive Bedieneinheit (12) mit einem Objekt (18) berührt wird, eine Strecke (sₘ) zu erfassen, welche durch das Objekt (18) beim Berühren der berührungssensitiven Bedieneinheit (12) zurückgelegt wird, und eine aktuelle Position zu erfassen, an welcher die berührungssensitive Bedieneinheit (12) mit dem Objekt (18) berührt wird;
- einer Erfassungseinrichtung (14), welche dazu ausgelegt ist, einen Druck (pₘ) zu erfassen, mit welchem die berührungssensitive Bedieneinheit (12) durch Berühren der berührungssensitiven Bedieneinheit (12) beaufschlagt wird;
- einer Steuereinrichtung (16), welche dazu ausgelegt ist, zu ermitteln, ob der erfasste Druck (pₘ) größer als ein vorgegebener Druckschwellwert (pₛ) ist, und eine der erfassten aktuellen Position zugeordnete und durch punktuelles Berühren und Drücken der berührungssensitiven Bedieneinheit (12) an der Position auslösbare Funktion (F) des Kraftfahrzeugs ausschließlich auszulösen, falls der erfasste Druck (pₘ) größer als der vorgegebene Druckschwellwert (pₛ) ist,
**dadurch gekennzeichnet, dass**
- die Steuereinrichtung (16) dazu ausgelegt ist, einen von zumindest zwei Bedienmodi in Abhängigkeit der erfassten Zeitdauer (tₘ) und/oder der erfassten Strecke (sₘ) vorzugeben, den Druckschwellwert (pₛ) in Abhängigkeit des vorgegebenen Bedienmodus vorzugeben, einen ersten Druckwert in einem ersten Bedienmodus als den Druckschwellwert (pₛ) vorzugeben, wenn die erfasste Zeitdauer (tₘ) eine vorbestimmte Zeitdauer unterschreitet und/oder die erfasste Strecke (sₘ) eine vorbestimmte Strecke unterschreitet, und einen zweiten Druckwert in einem Schrifteingabemodus und Gestenbedienmodus als den Druckschwellwert (pₛ) vorzugeben, wenn erfasst ist, dass die erfasste Zeitdauer (tₘ) zumindest der vorbestimmten Zeitdauer entspricht und/oder die erfasste Strecke (sₘ) zumindest der vorbestimmten Strecke entspricht, wobei der erste Druckwert kleiner als der zweite Druckwert ist und
- die Steuereinrichtung dazu ausgelegt ist,
- den ersten Bedienmodus als den Bedienmodus vorzugeben, wenn erfasst ist, dass die berührungssensitive Bedieneinheit (12) nur mit dem Objekt (38) berührt wird und die erfasste Zeitdauer (tₘ) die vorbestimmte Zeitdauer unterschreitet und/oder die erfasste Strecke (sₘ) die vorbestimmte Strecke unterschreitet;
- den Schrifteingabemodus als den Bedienmodus vorzugeben, bei welchem ein Überstreichen der berührungssensitiven Bedieneinheit (12) mittels des Objekts (18) erfassbar und in Abhängigkeit davon zumindest einem alphanumerischen Zeichen (36) zuordenbar ist, wenn erfasst ist, dass die berührungssensitive Bedieneinheit (12) nur mit dem Objekt (18) berührt wird und die erfasste Zeitdauer (tₘ) zumindest der vorbestimmten Zeitdauer entspricht und/oder die erfasste Strecke (sₘ) zumindest der vorbestimmten Strecke entspricht;
und
- den Gestenbedienungsmodus als den Bedienmodus vorzugeben, bei welchem ein Überstreichen der berührungssensitiven Bedieneinheit (12) mittels der Objekte (18, 38) erfassbar ist und, falls das Überstreichen zumindest einer vorgegebenen Geste entspricht, eine der Geste zugeordnete Funktion (F) des Kraftfahrzeugs auszulösen, wenn erfasst ist, dass die berührungssensitive Bedieneinheit (12) zusätzlich mit zumindest einem weiteren Objekt (38) berührt wird und die erfasste Zeitdauer (tₘ) zumindest der vorbestimmten Zeitdauer entspricht und/oder die erfasste Strecke (sₘ) zumindest der vorbestimmten Strecke entspricht.

4. Bedienvorrichtung (10) nach Anspruch 3,
**dadurch gekennzeichnet, dass**
die berührungssensitive Bedieneinheit (12) einen ersten, zumindest eine berührungssensitive Schaltfläche (24 bis 34) aufweisenden Bedienbereich (20) und einen daran angrenzenden zweiten berührungssensitiven Bedienbereich (22) umfasst, wobei die zumindest eine berührungssensitive Schaltfläche (24 bis 34) durch Drücken mit einem Druck (pₘ) größer dem vorgegebenen Druckschwellwert (pₛ) betätigbar ist, und, falls durch die Steuereinrichtung (16) erfasst wurde, dass das Objekt (18) die berührungssensitive Bedieneinheit (12) zumindest für eine vorbestimmte Zeitdauer (tₘ) berührt hat und/oder das Objekt (18) zumindest eine vorbestimmte Strecke (sₘ) auf der berührungssensitiven Bedieneinheit (12) zurückgelegt hat, die zumindest eine berührungssensitive Schaltfläche (24 bis 34) zum Eingeben von alphanumerischen Zeichen (36) und/oder vorbestimmten Gesten überstreichbar ist.

5. Kraftfahrzeug mit einer Bedienvorrichtung (10) nach Anspruch 3 oder 4.

## Claims

1. Method for operating an operating device (10) of a motor vehicle, wherein the operating device (10) has a touch-sensitive operating unit (12), a detecting device (14) and a control device (16), having the steps:
- by means of the touch-sensitive operating unit (12), detecting a time duration (tₘ) over which the touch-sensitive operating unit (12) is touched with an object (18) and/or detecting a distance (sₘ) which is traversed by the object (18) at its touching on the touch-sensitive operating unit (12);
- by means of the touch-sensitive operating unit (12), detecting a current position at which the touch-sensitive operating unit (12) operated in the set operating mode is touched with the object (18);
- by means of the detecting device (14), detecting a pressure (pₘ) with which the touch-sensitive operating unit (12) is pressed through a touching of the touch-sensitive operating unit (12);
- by means of the control device (16), determining whether the detected pressure (pₘ) is greater than a set pressure threshold value (pₛ);
- by means of the control device (16), triggering a function (F) of the motor vehicle assigned to the detected actual position and able to be triggered by means of punctual touching and pressing of the touch-sensitive operating unit (12) at the position, only in the case that the detected pressure (pₘ) is greater than the set pressure threshold value (pₛ);
**characterised by**
- by means of the control device (16), setting one of at least two operating modes depending on the detected time duration (tₘ) and/or the detected distance (sₘ),
- by means of the control device (16), setting the pressure threshold value (pₛ) depending on the set operating mode;
- by means of the control device (16), setting a first pressure value in a first operating mode as the threshold pressure value (pₛ) when the detected time duration (tₘ) undershoots a predetermined time duration and/or the detected distance (sₘ) undershoots a predetermined distance, and setting a second pressure value in a text input mode and gesture operating mode as the threshold pressure value (pₛ) when it is detected that the detected time duration (tₘ) is equal to at least the predetermined time duration and/or the detected distance (sₘ) is equal to at least the predetermined distance, wherein the first pressure value is smaller than the second pressure value and wherein,
- when it is detected that the touch-sensitive operating unit (12) is touched only with the object (38) and the detected time duration (tₘ) undershoots the predetermined time duration and/or the detected distance (sₘ) undershoots the predetermined distance, the first operating mode is set as the operating mode;
- when it is detected that the touch-sensitive operating unit (12) is touched only with the object (18) and the detected time duration (tₘ) is equal at least to the predetermined time duration and/or the detected distance (sₘ) is equal at least to the predetermined distance, the text input mode is set as the operating mode, in which a brushing-over of the touch-sensitive operating unit (12) by means of the object (18) is detected and depending thereon is assigned to at least one alphanumeric character (36); and
- when it is detected that the touch-sensitive operating unit (12) is touched additionally with at least one further object (38) and the detected time duration (tₘ) is equal to at least the predetermined time duration and/or the detected distance (sₘ) is equal to at least the predetermined distance, the gesture operating mode is set as the operating mode, in which a brushing-over of the touch-sensitive operating unit (12) by means of the objects (18, 38) is detected and, in the case that the brushing-over corresponds to at least one set gesture, a function (F) of the motor vehicle assigned to the gesture is triggered.

2. Method according to claim 1,
**characterised in that**
the text input mode is further maintained for a set time duration, after it has been detected that the object (18) no longer touches the touch-sensitive operating unit (12).

3. Operating device (10) for a motor vehicle, having
- a touch-sensitive operating unit (12) which is configured to detect a time duration (tₘ) during which the touch-sensitive operating unit (12) is touched with an object (18), to detect a distance (sₘ) which is traversed by the object (18) when it touches the touch-sensitive operating unit (12), and to detect an actual position at which the touch-sensitive operating unit (12) is touched with the object (18);
- a detecting device (14) which is configured to detect a pressure (pₘ) with which the touch-sensitive operating unit (12) is pressed by touching the touch-sensitive operating unit (12);
- a control device (16) which is configured to determine whether the detected pressure (pₘ) is greater than a set pressure threshold value (pₛ), and to trigger a function (F) of the motor vehicle assigned to the detected actual position and able to be triggered by punctual touching and pressing of the touch-sensitive operating unit (12) at the position, only in the case that the detected pressure (pₘ) is greater than the set pressure threshold value (pₛ),
**characterised in that**
- the control device (16) is configured to set one of at least two operating modes depending on the detected time duration (tₘ) and/or the detected distance (sₘ), to set the pressure threshold value (pₛ) depending on the set operating mode, to set a first pressure value in a first operating mode as the pressure threshold value (pₛ) when the detected time duration (tₘ) undershoots a predetermined time duration and/or the detected distance (sₘ) undershoots a predetermined distance, and to set a second pressure value in a text input mode and gesture operating mode as the pressure threshold value (pₛ) when it is detected that the detected time duration (tₘ) is equal to at least the predetermined time duration and/or the detected distance (sₘ) is equal to at least the predetermined distance, wherein the first pressure value is smaller than the second pressure value and
- the control device is configured
- to set the first operating mode as the operating mode when it is detected that the touch-sensitive operating unit (12) is touched only with the object (38) and the detected time duration (tₘ) undershoots the predetermined time duration and/or the detected distance (sₘ) undershoots the predetermined distance;
- to set the text input mode as the operating mode, in which a brushing-over of the touch-sensitive operating unit (12) by means of the object (18) can be detected and depending thereon can be assigned to at least one alphanumeric character (36), when it is detected that the touch-sensitive operating unit (12) is touched only with the object (18) and the detected time duration (tₘ) is equal to at least the predetermined time duration and/or the detected distance (sₘ) is equal to at least the predetermined distance;
and
- to set the gesture operating mode as the operating mode, in which a brushing-over of the touch-sensitive operating unit (12) by means of the objects (18, 38) is able to be detected and, in the case that the brushing-over is equivalent to at least one set gesture, to trigger a function (F) of the motor vehicle assigned to the gesture, when it is detected that the touch-sensitive operating unit (12) is touched additionally with at least one further object (38) and the detected time duration (tₘ) is equal to at least the predetermined time duration and/or the detected distance (sₘ) is equal to at least the predetermined distance.

4. Operating device (10) according to claim 3,
**characterised in that**
the touch-sensitive operating unit (12) comprises a first operating portion (20) having at least one touch-sensitive button (24 to 34) and a second touch-sensitive operating portion (22) adjacent thereto, wherein the at least one touch-sensitive button (24 to 34) can be actuated by pressing with a pressure (pₘ) greater than the set pressure threshold value (pₛ), and, in the case that it was detected by the control device (16) that the object (18) has touched the touch-sensitive operating unit (12) at least for a predetermined time duration (tₘ) and/or the object (18) has traversed at least a predetermined distance (Sₘ) on the touch-sensitive operating unit (12), the at least one touch-sensitive button (24 to 34) can be brushed-over for the inputting of alphanumeric characters (36) and/or predetermined gestures.

5. Motor vehicle having an operating device (10) according to claim 3 or 4.

## Revendications

1. Procédé de fonctionnement d'un dispositif de commande (10) d'un véhicule automobile, dans lequel le dispositif de commande (10) comporte une unité de commande tactile (12), un dispositif de détection (14) et un dispositif de commande (16), avec les étapes :
- au moyen de l'unité de commande tactile (12), détecter une durée (tₘ) pendant laquelle l'unité de commande tactile (12) est touchée par un objet (18) et/ou détecter une distance (sₘ) qui est parcourue par l'objet (18) lorsque l'unité de commande tactile (12) est touchée ;
- au moyen de l'unité de commande tactile (12), détecter une position actuelle au niveau de laquelle l'unité de commande tactile (12) fonctionnant dans le mode de commande prescrit est touchée par l'objet (18) ;
- au moyen du dispositif de détection (14), détecter une pression (pₘ) à laquelle l'unité de commande tactile (12) est soumise lorsque l'unité de commande tactile (12) est touchée ;
- au moyen du dispositif de commande (16), déterminer si la pression détectée (pₘ) est supérieure à une valeur de seuil de pression (pₛ) prédéterminée ;
- au moyen du dispositif de commande (16), déclencher une fonction (F) du véhicule automobile associée à la position actuelle détectée et pouvant être déclenchée par un contact et une pression ponctuels sur l'unité de commande tactile (12) au niveau de la position seulement si la pression détectée (pₘ) est supérieure à la valeur de seuil de pression (pₛ) prédéterminée ;
**caractérisé par** les étapes :
- au moyen du dispositif de commande (16), prescrire un mode de commande parmi au moins deux modes de commande en fonction de la durée (tₘ) détectée et/ou de la distance (sₘ) détectée ;
- au moyen du dispositif de commande (16), prescrire la valeur de seuil de pression (pₛ) en fonction du mode de commande prescrit ;
- au moyen du dispositif de commande (16), prescrire une première valeur de pression dans un premier mode de commande comme valeur de seuil de pression (pₛ) lorsque la durée (tₘ) détectée est inférieure à une durée prédéterminée et/ou lorsque la distance (sₘ) détectée est inférieure à une distance prédéterminée et prescrire une deuxième valeur de pression dans un mode d'entrée par écriture et dans un mode de commande par gestes comme valeur de seuil de pression (pₛ) lorsqu'il a été détecté que la durée (tₘ) détectée correspond au moins à la durée prédéterminée et/ou que la distance (sₘ) détectée correspond au moins à la distance prédéterminée, la première valeur de pression étant inférieure à la deuxième valeur de pression, et dans lequel
- s'il a été détecté que l'unité de commande tactile (12) n'est touchée que par l'objet (18) et que la durée (tₘ) détectée est inférieure à la durée prédéterminée et/ou que la distance (sₘ) détectée est inférieure à la distance prédéterminée, on prescrit le premier mode de commande comme mode de commande ;
- s'il a été détecté que l'unité de commande tactile (12) n'est touchée que par l'objet (18) et que la durée (tₘ) détectée correspond au moins à la durée prédéterminée et/ou que la distance (sₘ) détectée correspond au moins à la distance prédéterminée, on prescrit le mode d'entrée par écriture comme mode de commande, mode dans lequel on détecte un glissement de l'objet (18) sur l'unité de commande tactile (12) et on associe au moins un caractère alphanumérique (36) en fonction dudit glissement ; et
- s'il a été détecté que l'unité de commande tactile (12) est touchée en plus par au moins un autre objet (38) et que la durée (tₘ) détectée correspond au moins à la durée prédéterminée et/ou que la distance (sₘ) détectée correspond au moins à la distance prédéterminée, on prescrit le mode de commande par gestes comme mode de commande, mode dans lequel on détecte un glissement de l'objet (18, 38) sur l'unité de commande tactile (12) et, si le glissement correspond à au moins un geste prédéterminé, on déclenche une fonction (F) du véhicule automobile associée au geste.

2. Procédé selon la revendication 1,
**caractérisé en ce que**
le mode d'entrée par écriture est maintenu pour une durée prédéterminée après qu'il a été détecté que l'unité de commande tactile (12) n'est plus touchée par l'objet (18).

3. Dispositif de commande (10) pour un véhicule automobile, avec
- une unité de commande tactile (12), qui est conçue pour détecter une durée (tₘ) pendant laquelle l'unité de commande tactile (12) est touchée par un objet (18), pour détecter une distance (sₘ) qui est parcourue par l'objet (18) lorsque l'unité de commande tactile (12) est touchée et pour détecter une position actuelle au niveau de laquelle l'unité de commande tactile (12) est touchée par l'objet (18) ;
- un dispositif de détection (14), qui est conçu pour détecter une pression (pₘ) à laquelle l'unité de commande tactile (12) est soumise lorsque l'unité de commande tactile (12) est touchée ;
- un dispositif de commande (16), qui est conçu pour déterminer si la pression détectée (pₘ) est supérieure à une valeur de seuil de pression (pₛ) prédéterminée et pour déclencher une fonction (F) du véhicule automobile associée à la position actuelle détectée et pouvant être déclenchée par un contact et une pression ponctuels sur l'unité de commande tactile (12) au niveau de la position seulement si la pression détectée (pₘ) est supérieure à la valeur de seuil de pression (pₛ) prédéterminée,
**caractérisé en ce que**
- le dispositif de commande (16) est conçu pour prescrire un mode de commande parmi au moins deux modes de commande en fonction de la durée (tₘ) détectée et/ou de la distance (sₘ) détectée, pour prescrire la valeur de seuil de pression (pₛ) en fonction du mode de commande prescrit, pour prescrire une première valeur de pression dans un premier mode de commande comme valeur de seuil de pression (pₛ) lorsque la durée (tₘ) détectée est inférieure à une durée prédéterminée et/ou lorsque la distance (sₘ) détectée est inférieure à une distance prédéterminée et pour prescrire une deuxième valeur de pression dans un mode d'entrée par écriture et dans un mode de commande par gestes comme valeur de seuil de pression (pₛ) lorsqu'il a été détecté que la durée (tₘ) détectée correspond au moins à la durée prédéterminée et/ou que la distance (sₘ) détectée correspond au moins à la distance prédéterminée, la première valeur de pression étant inférieure à la deuxième valeur de pression, et
- le dispositif de commande est conçu pour
- s'il a été détecté que l'unité de commande tactile (12) n'est touchée que par l'objet (38) et que la durée (tₘ) détectée est inférieure à la durée prédéterminée et/ou que la distance (sₘ) détectée est inférieure à la distance prédéterminée, prescrire le' premier mode de commande comme mode de commande ;
- s'il a été détecté que l'unité de commande tactile (12) n'est touchée que par l'objet (18) et que la durée (tₘ) détectée correspond au moins à la durée prédéterminée et/ou que la distance (sₘ) détectée correspond au moins à la distance prédéterminée, prescrire le mode d'entrée par écriture comme mode de commande, mode dans lequel un glissement de l'unité de commande tactile (12) peut être détecté au moyen de l'objet (18) et au moins un caractère alphanumérique (36) peut être associé en fonction dudit glissement ;
et
- s'il a été détecté que l'unité de commande tactile (12) est touchée en plus par au moins un autre objet (38) et que la durée (tₘ) détectée correspond au moins à la durée prédéterminée et/ou que la distance (sₘ) détectée correspond au moins à la distance prédéterminée, prescrire le mode de commande par gestes comme mode de commande, mode dans lequel un glissement de l'unité de commande tactile (12) peut être détecté au moyen des objets (18, 38) et, si le glissement correspond à au moins un geste prédéterminé, déclencher une fonction (F) du véhicule automobile associée au geste.

4. Dispositif de commande (10) selon la revendication 3,
**caractérisé en ce que**
l'unité de commande tactile (12) comprend une première zone de commande (20) comportant au moins une surface de commutation tactile (24 à 34) et une deuxième zone de commande tactile (22) adjacente, dans lequel l'au moins une surface de commutation tactile (24 à 34) peut être actionnée en appuyant avec une pression (pₘ) supérieure à la valeur de seuil de pression (pₛ) prédéterminée et, s'il a été détecté par le dispositif de commande (16) que l'unité de commande tactile (12) a été touchée par l'objet (18) au moins pendant une durée (tₘ) prédéterminée et/ou que l'objet (18) a parcouru au moins une distance (sₘ) prédéterminée sur l'unité de commande tactile (12), un glissement peut être effectué sur l'au moins une surface de commutation tactile (24 à 34) pour entrer des caractères alphanumériques (36) et/ou des gestes prédéterminés.

5. Véhicule automobile avec un dispositif de commande (10) selon la revendication 3 ou 4.
